# DEMANDE DE BREVET EUROPEEN

(11) **EP 2 590 286 A1**
(43) Date de publication de la demande: **08.05.2013**
(21) Numéro de dépôt: 12191617.5
(22) Date de dépôt: 07.11.2012
(51) Int. Cl.: H02G 15/00, H02G 15/013, H02G 15/18, H02G 15/196

(54) **Enveloppement pour encapsuler une zone de raccordement de câbles ainsi qu'ensemble et noeud de câbles le comportant**

(30) Priorité: 07.11.2011 FR 1160132
(71) Demandeur: Societe Industrielle de Construction d'Appareils et de Materiel Electriques, 19230 Arnac Pompadour (FR)
(72) Inventeur: Gorecki, Piotr, 24120 Terrasson-Lavilledieu (FR); Mendes, Ghislain, 19130 Saint Aulaire (FR)
(74) Mandataire: Santarelli

(57) **Abrégé**

L'enveloppement est configuré pour permettre d'injecter entre la zone de raccordement de câbles et l'enveloppement une pré-résine liquide polymérisable. Il est formé par une chemise (11) comportant une peau (18) en matière souple étanche aux liquides et une fermeture à curseur (29) pour assujettir deux bords longitudinaux opposés de ladite peau (18).

L'ensemble comporte la chemise (11) et deux joints (12) chacun configuré pour recevoir au moins un câble (2, 3).

Le noeud comporte la zone de raccordement et l'ensemble posé sur cette zone.

## Description

L'invention a trait à l'encapsulation des zones de raccordement de câbles faisant par exemple partie d'un réseau souterrain de distribution d'énergie électrique.

On sait que pour raccorder des câbles, il faut enlever sur une certaine longueur la gaine externe de chaque câble ainsi que l'écran métallique de blindage qui entoure le ou les conducteurs si les câbles comportent un tel écran ; et que pour fournir à la zone où les câbles se raccordent une protection semblable à celle fournie par la gaine externe des câbles, il est connu d'encapsuler la zone de raccordement avec une résine obtenue grâce à une pré-résine liquide injectée entre la zone de raccordement de câbles et un enveloppement formé à cet effet autour de la zone de raccordement de câbles, laquelle pré-résine durcit en polymérisant pour devenir une résine qui encapsule alors la zone de raccordement de câbles.

De façon traditionnelle, l'enveloppement est formée par du ruban adhésif posé autour d'une nappe d'espacement en mousse perméable aux liquides, cet enveloppement étant en général muni d'une canule d'injection et d'une ou plusieurs cheminée(s) d'évacuation d'air.

La demande de brevet européen EP 1 505 693 propose un enveloppement formé par une matière en feuille dont deux bords longitudinaux comportent des moyens de rétention par adhésif pour permettre à la matière en feuille d'être maintenue autour de la zone de raccordement.

L'invention vise à fournir un enveloppement plus simple et plus commode à utiliser.

Elle propose à cet effet un enveloppement pour encapsuler une zone de raccordement de câbles, configuré pour permettre d'injecter entre la zone de raccordement de câbles et l'enveloppement une pré-résine liquide polymérisable pour donner une résine encapsulant ladite zone de raccordement de câbles, **caractérisé en ce que** ledit enveloppement est formé par une chemise d'enveloppement comportant une peau en matière souple étanche aux liquides et une fermeture à curseur pour assujettir deux bords longitudinaux opposés de ladite peau, ladite chemise d'enveloppement étant configurée pour former, dans un état fermé où lesdits deux bords longitudinaux sont assujettis l'un à l'autre par ladite fermeture, un manchon étanche aux liquides entourant latéralement ladite zone de raccordement de câbles.

Grâce à la fermeture à curseur, la mise en place de la chemise d'enveloppement selon l'invention est particulièrement commode, puisqu'il suffit de manoeuvrer le curseur de la fermeture pour assujettir l'un à l'autre les deux bords longitudinaux.

Au surplus, une fermeture à curseur offre l'avantage de fournir un assujettissement qui est particulièrement sûr dans les environnements tels que les chantiers de pose ou d'entretien des réseaux souterrains de distribution d'énergie électrique.

En effet, même s'il y a un peu de poussière ou de terre sur la fermeture à glissière, une fois que le curseur a coulissé, l'on est sûr que les deux bords longitudinaux resteront assujettis l'un à l'autre, contrairement à la jonction par adhésif proposée dans la demande de brevet européen EP 1 505 693 (la terre ou la poussière empêchera l'adhésif de l'un des bords longitudinaux de coller sur l'autre bord longitudinal).

Selon des caractéristiques préférées, ladite fermeture à curseur comporte deux bandes chacune fixée le long d'un respectif desdits bords longitudinaux opposés et comportant chacune au-delà d'un premier bord transversal une portion initiale respective.

Les portions initiales permettent au curseur de prendre un peu de vitesse avant d'être situé le long des bords longitudinaux de la peau, ce qui permet par exemple de faciliter la pose lorsque la peau doit être tendue sur la zone de raccordement de câbles.

Selon des caractéristiques préférées, lesdites bandes comportent chacune au-delà d'un deuxième bord transversal, une portion finale respective.

Les portions finales permettent de placer le curseur au-delà des bords longitudinaux de la peau et donc d'être certain que les deux bords longitudinaux sont bien assujettis l'un à l'autre sur toute leur longueur.

Selon d'autres caractéristiques préférées, pour des raisons de simplicité et de commodité d'utilisation :
- ladite peau comporte deux bossages ; et/ou
- ladite chemise d'enveloppement comporte une canule d'injection de ladite pré-résine et au moins une cheminée d'évacuation d'air.

L'invention vise également, sous un deuxième aspect, un ensemble pour encapsuler une zone de raccordement de câbles, comportant une chemise d'enveloppement tel qu'exposé ci-dessus et deux joints configurés pour recevoir chacun au moins un câble et pour être entourés par ladite chemise le long d'un bord transversal respectif.

L'invention vise également, sous un troisième aspect, un noeud de câbles comportant :
- une zone de raccordement de câbles comportant un connecteur, au moins un premier câble s'étendant d'un premier côté du connecteur et au moins un deuxième câble s'étendant d'un deuxième côté du connecteur opposé audit premier côté, avec chaque dit premier câble et deuxième câble qui comporte une gaine externe entourant au moins un conducteur présentant une âme en matière conductrice et une gaine individuelle qui recouvre l'âme conductrice, ladite gaine externe du premier câble étant enlevée entre le connecteur et une zone où le premier câble est entier, ladite gaine externe du deuxième câble étant enlevée entre le connecteur et une zone où le deuxième câble est entier, le conducteur du premier câble étant engagé dans ledit connecteur, le conducteur du deuxième câble étant engagé dans ledit connecteur ; et
- un ensemble tel qu'exposé ci-dessus, avec chaque dit joint qui est mis en place respectivement sur ladite zone où le premier câble est entier et sur ladite zone où le deuxième câble est entier.

L'exposé de l'invention sera maintenant poursuivi par la description détaillée d'exemples de réalisation, donnée ci-après à titre illustratif et non limitatif, en référence aux dessins annexés, sur lesquels :
- la figure 1 est une vue en perspective d'une zone de raccordement de câbles équipée de joints d'extrémité d'un ensemble pour encapsuler conforme à l'invention ;
- les figures 2 à 4 sont des vues semblables à la figure 1 montrant des étapes successives d'équipement de la zone de raccordement de câbles avec respectivement une première nappe d'espacement, une nappe de conduction et une deuxième nappe d'espacement de l'ensemble pour encapsuler;
- la figure 5 est une vue en plan d'une chemise de l'ensemble pour encapsuler, destinée à envelopper la zone de raccordement de câbles équipée comme montré sur la figure 4 ;
- la figure 6 est un détail d'une extrémité terminale d'une bande de la fermeture à curseur que comporte la chemise ;
- la figure 7 est une vue en perspective montrant la chemise partiellement mise en place sur la zone de raccordement de câbles équipée comme montré sur la figure 4 ;
- la figure 8 est une vue semblable à la figure 7 mais avec la chemise mise en place sur la zone de raccordement équipée, à l'état fermé ; et
- la figure 9 est une vue semblable à la figure 1 pour une variante de la zone de raccordement de câbles.

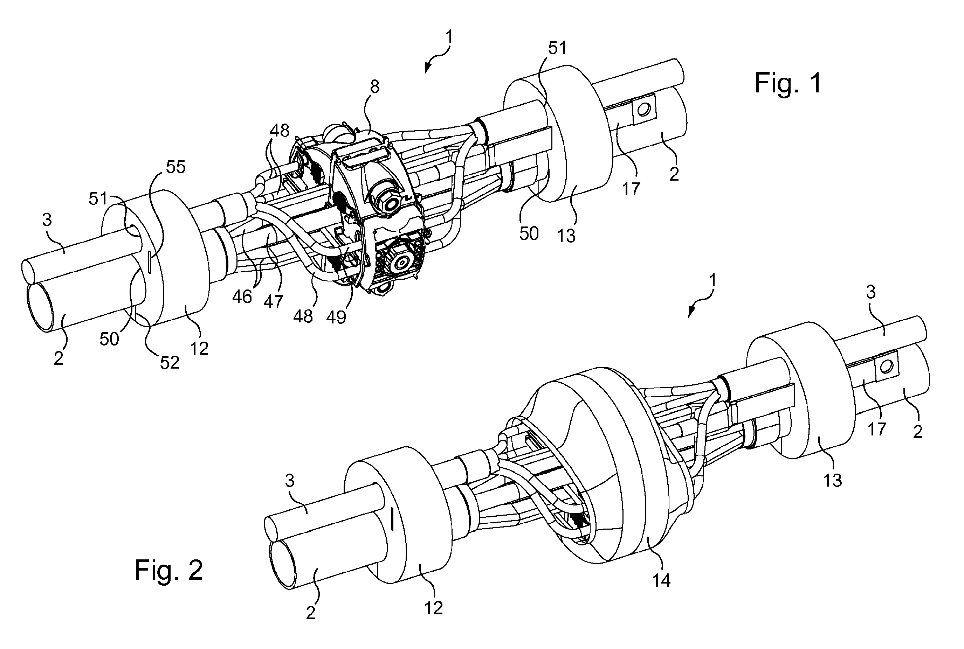

La figure 1 montre une zone de raccordement de câbles 1 comportant un câble principal 2, deux câbles de dérivation 3 et un connecteur 8 par lequel les câbles 2 et 3 sont connectés en parallèle.

Le câble principal 2 comporte quatre conducteurs, respectivement trois conducteurs de phase 46 (dont seuls deux sont visibles sur les dessins) et un conducteur de neutre 47. De même, chaque câble de dérivation 3 comporte trois conducteurs de phase 48 et un conducteur de neutre 49.

Les conducteurs 46 à 49 comportent chacun une âme conductrice métallique revêtue d'une gaine en matière plastique isolante ou, pour les conducteurs de neutre, d'une gaine en plomb. Dans le câble 2, les quatre conducteurs 46 et 47 sont entourés d'abord par un écran métallique de blindage puis par une gaine externe en matière plastique isolante ; et de même pour les quatre conducteurs 48 et 49 de chaque câble 3.

La section des conducteurs 46 et 47 du câble principal 2 est plus importante que la section des conducteurs 48 et 49 de chaque câble de dérivation 3. Le diamètre externe du câble 2 est plus important que le diamètre externe des câbles 3.

Comme il est visible à la figure 1, les conducteurs 46 et 47 du câble 2 sont reliés chacun à un conducteur 48 ou 49 respectif de chaque câble 3 par le connecteur 8. En outre, les conducteurs de neutre 47 et 49 sont reliés à une tresse métallique 17 de mise à la terre.

Le câble principal 2 et les câbles de dérivation 3 s'étendent ici chacun d'un côté et de l'autre du connecteur 8. Le connecteur 8 est un connecteur tétrapolaire à perforation d'isolant, assurant la liaison électrique entre les paires de conducteurs à relier.

Ici, le connecteur tétrapolaire 8 est tel que décrit dans la demande de brevet français 2 901 413.

La zone de raccordement de câbles 1 fait ici partie d'un réseau souterrain de distribution d'énergie électrique en basse tension triphasée.

Pour connecter avec le connecteur 8 les conducteurs des câbles 2 et 3, il a fallu enlever sur une certaine longueur l'écran métallique de blindage et la gaine externe de chaque câble 2 et 3.

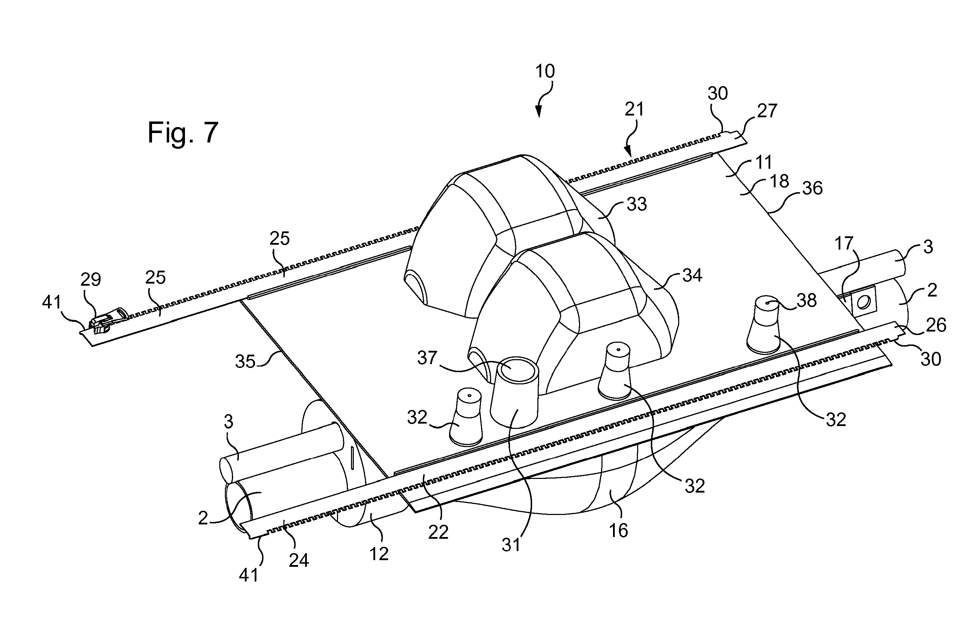

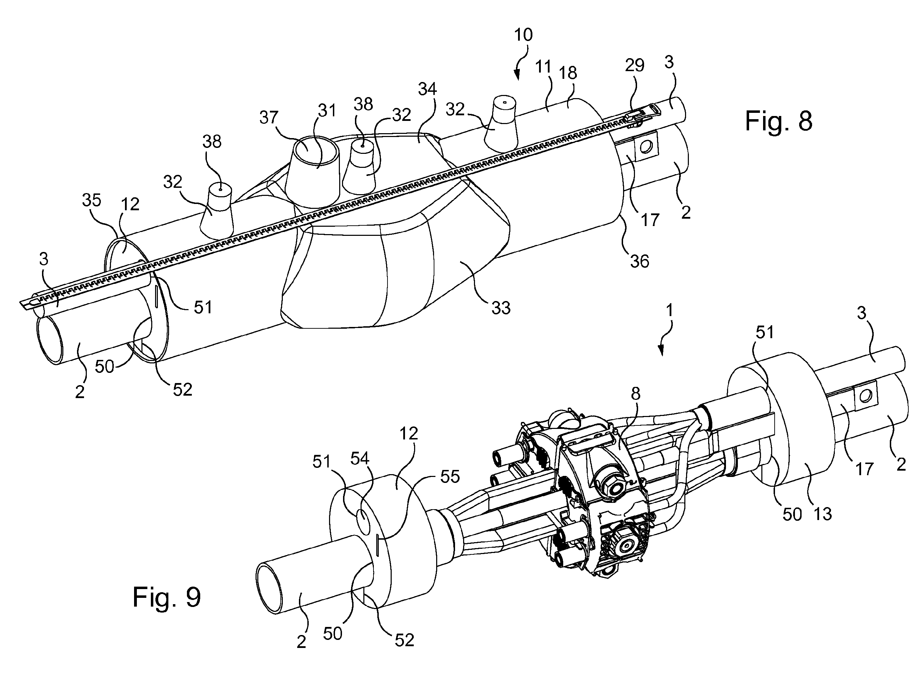

On décrit ci-après un ensemble 10 (figures 7 et 8) pour encapsuler la zone de raccordement 1, afin de fournir au connecteur 8 et aux conducteurs des câbles 2 et 3 une protection semblable à celle fournie par l'écran métallique de blindage et par la gaine externe.

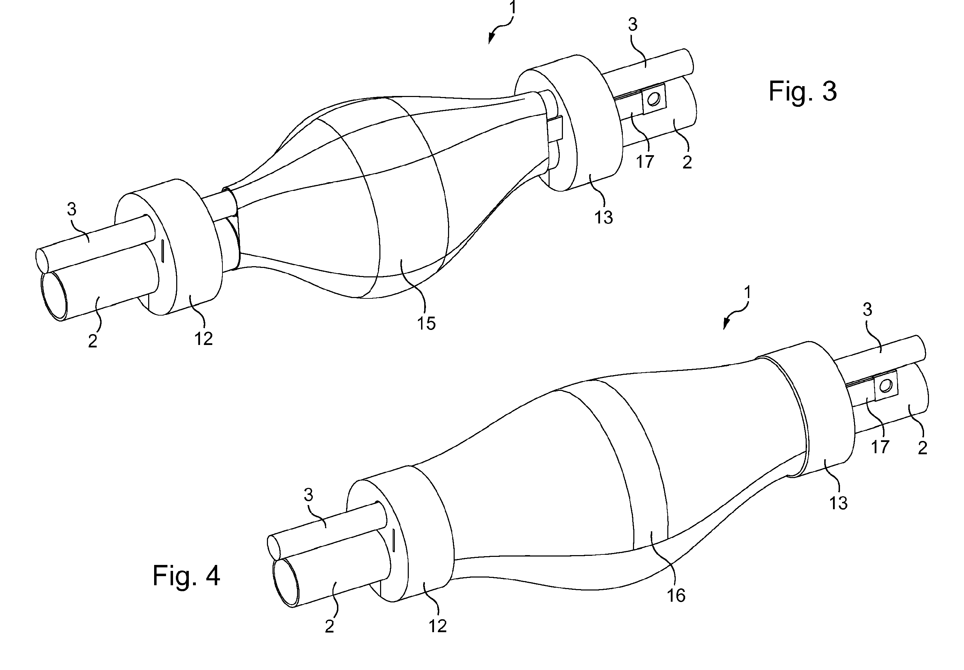

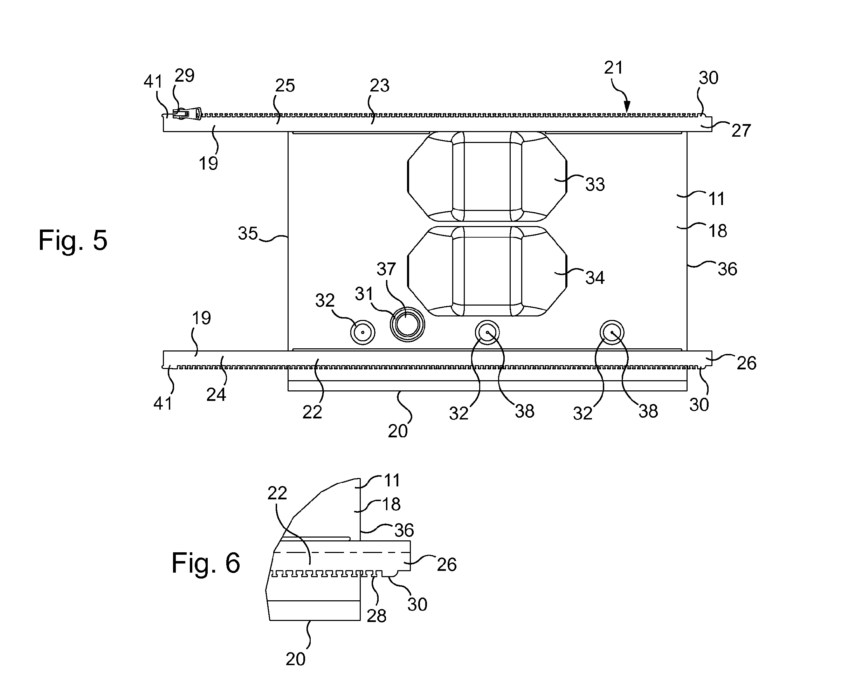

L'ensemble 10 comporte deux joints 12 et 13 identiques, une première nappe d'espacement 14 (figure 2), une nappe conductrice 15 (figure 3), une deuxième nappe d'espacement 16 (figure 4) et une chemise d'enveloppement 11 (figures 5 à 8).

Une fois que les différents éléments de l'ensemble 10 sont en place sur la zone de raccordement 1, une pré-résine liquide polymérisable (durcissable) est injectée entre la zone de raccordement de câble 1 et la chemise 11. Lorsque la pré-résine est polymérisée (durcie), elle donne une résine encapsulant la zone de raccordement de câbles 1.

Les joints 12 et 13 sont en mousse souple et imperméable aux liquides (alvéoles fermées). Les joints 12 et 13 sont cylindriques. Ils présentent ici chacun deux perforations traversantes 50 et 51 ainsi que des fentes traversantes 52 et 55.

La perforation 50 a un diamètre correspondant à celui du câble principal 2 et la perforation 51 a un diamètre correspondant à celui du câble de dérivation 3.

La fente 52 s'étend de la perforation 50 à la tranche externe du joint 12 ou 13.

La fente 55 est à l'écart des perforations 50 et 51 et de la tranche du joint 12 ou 13. La longueur de la fente 55 correspond à la largeur de la tresse 17.

Sur la figure 1, la zone de raccordement 1 est équipée des joints 12 et 13. Le joint 12 est placé à une première extrémité de la zone de raccordement 1, en une zone où les deux câbles 2 et 3 sont entiers. Le joint 13 est placé à une deuxième extrémité de la zone de raccordement 1 opposée à la première extrémité en une zone où les deux câbles 2 et 3 sont entiers. A chaque joint 12 ou 13, le câble 2 est logé dans une perforation 50 et le câble 3 dans une perforation 51. La fente 52 permet la mise en place du joint 12 ou 13 sur le câble 2. Les câbles 3 sont chacun enfilés dans la perforation 51 respectivement du joint 12 et du joint 13.

La fente 55 du joint 13 reçoit la tresse métallique 17 de mise à la terre du pôle de neutre. La mise en place s'effectue par enfilement de la tresse 17 au travers de la fente 55.

La première nappe d'espacement 14 (figure 2) est en mousse souple et perméable aux liquides (alvéoles ouvertes).

La largeur de la nappe 14 correspond à la largeur du connecteur 8. En variante, la largeur de la nappe 14 est plus grande que la largeur du connecteur 8.

La longueur de la nappe 14 correspond au périmètre du connecteur 8. L'épaisseur de la nappe 14 correspond à un écart que l'on souhaite garantir entre le pourtour du connecteur 8 et un écran en matière conductrice formé ici par la nappe conductrice 15 (figure 3).

Sur la figure 2, la zone de raccordement 1 est équipée de la nappe 14, qui entoure directement le connecteur 8.

Pour permettre à la première nappe 14 de se maintenir autour du connecteur 8, les deux extrémités de la nappe 14 qui se rejoignent sont maintenues l'une à l'autre par un morceau de ruban adhésif. Dans une variante non illustrée, l'une des extrémités comporte une languette, l'autre extrémité présente une fente et pour maintenir les deux extrémités l'une à l'autre, la languette est passée au travers de la fente.

La nappe conductrice 15 (figure 3) est ici un treillis métallique perméable aux liquides.

La largeur de la nappe conductrice 15 correspond à la somme de la largeur du connecteur 8 et de deux fois la distance sur laquelle l'écran de blindage et la gaine externe des câbles 2 et 3 est enlevée. La distance entre les joints 12 et 13 est plus grande que la largeur de la nappe conductrice 15 pour qu'il y ait entre chaque joint 12 et 13 et le bord transversal correspondant de la nappe 15, une certaine distance sur laquelle les câbles 2 et 3 sont entiers.

La longueur de la nappe conductrice 15 est suffisante pour qu'elle puisse entourer complètement la zone de raccordement 1.

La nappe conductrice 15 se maintient sur la zone de raccordement 1 grâce par exemple à un ruban adhésif l'entourant à proximité du joint 12 et du joint 13.

La nappe conductrice 15 est en contact avec la tresse métallique 17. Par conséquent, une liaison électrique existe entre la nappe conductrice 15 et la tresse métallique 17, de sorte que si la tresse 17 est mise à la terre, la nappe conductrice 15 est du même coup mise à la terre.

La deuxième nappe d'espacement 16 est faite dans la même matière que la nappe 14, c'est-à-dire une mousse souple perméable aux liquides (alvéoles ouvertes).

La nappe d'espacement 16 a une largeur correspondant à l'écartement entre les joints 12 et 13 et une longueur lui permettant d'entourer complètement la nappe métallique 15.

Pour permettre à la deuxième nappe 16 de se maintenir autour de la nappe conductrice 15, les deux extrémités de la nappe 16 qui se rejoignent sont maintenues l'une à l'autre par un morceau de ruban adhésif. Dans une variante non illustrée, l'une des extrémités de la nappe 16 comporte une pluralité de languettes, l'autre extrémité présente une pluralité de fentes correspondantes, et pour maintenir les deux extrémités l'une à l'autre, les différentes languettes sont passées au travers des fentes correspondantes.

La chemise 11, comme visible aux figures 5, 7 et 8, comporte une peau 18, une fermeture à curseur 19, une canule 31 et trois cheminées 32.

La peau 18 s'étend longitudinalement d'un premier bord transversal 35 à un deuxième bord transversal 36. Elle comporte deux bords longitudinaux 20 et 21 opposés l'un à l'autre.

La peau 18 est en matière souple étanche aux liquides, d'épaisseur globalement constante, conformée comme une feuille avec deux bossages 33 et 34 chacun à mi-distance des bords transversaux 35 et 36.

Le bossage 33 est à proximité du bord 21. Le bossage 34 est contigu au bossage 33 et à distance du bord 20.

Entre le bossage 34 et le bord longitudinal 20, la canule 31 et les cheminées 32 sont disposées de façon sensiblement alignée.

La canule 31 et les cheminées 32 saillent de la peau 18 du côté où les bossages 33 et 34 sont convexes.

La canule 31 délimite un conduit d'injection 37 débouchant respectivement au sommet de la canule 31 et au travers de la peau 18.

Chaque cheminée 32 délimite un conduit d'évacuation d'air débouchant par un orifice 38 d'un opercule situé au sommet de la cheminée 32 et au travers de la peau 18.

Ici, la peau 18, la canule 31 et les cheminées 32 sont moulées d'une seule pièce dans la même matière.

La longueur de la chemise 11 (distance entre les bords transversaux 35 et 36) correspond à la somme de la distance entre les joints 12 et 13 et de l'épaisseur de ces joints.

Comme les joints 12 et 13 sont chacun posés sur une zone où les câbles 2 et 3 sont entiers, la largeur de la chemise 11 est plus grande que la somme de la largeur du connecteur 8, de deux fois la distance sur laquelle l'écran de blindage et la gaine externe des câbles 2 et 3 est enlevée, de l'épaisseur du joint 12 et de l'épaisseur du joint 13.

En pratique, la largeur de la chemise 11 est prévue pour que le bord 35 soit au niveau de la face externe du joint 12 (face qui regarde vers l'opposé du connecteur 8) et le bord 36 au niveau de la face externe du joint 13 (face qui regarde vers l'opposé du connecteur 8).

La largeur de la chemise 11 (distance entre les bords 20 et 21) est telle que lorsque l'on entoure avec la chemise 11 la zone de raccordement 1 équipée comme montrée sur la figure 4, en plaçant le bord 20 au niveau du bord 21, la peau 18 est légèrement tendue.

Ici, la matière de la peau 18 est un caoutchouc, qui présente une légère élasticité.

La fermeture à curseur 19 comporte deux bandes 22 et 23 et un curseur 29.

La fermeture 19 est ici du type rencontré habituellement sur les vêtements.

Les bandes 22 et 23 sont de même longueur. Elles sont chacune fixées, ici par couture, le long d'un bord longitudinal 20 et 21 respectif. Les bandes 22 et 23 sont de longueur supérieure à la distance entre le bord 35 et le bord 36 de la peau 18. Elles s'étendent chacune d'une portion initiale respective 24 et 25 au-delà du bord 35 à une portion finale respective 26 et 27 au-delà du bord 36.

Chaque bande 22 et 23 comporte une butée 30, un cran 41 et une série de dents 28 (voir figure 6).

Le cran 41 est situé à l'extrémité distale de la portion initiale 24 et 25 respective. Le cran 41 de la bande 23 empêche le curseur 29 de quitter la bande 23 à l'extrémité de la portion 25. Le cran 41 de la bande 22 est configuré pour être introduit dans une rainure du curseur 29 et ainsi permettre l'engagement coulissant du curseur 29 sur la bande 22.

La butée 30 (visible à la figure 6) est située à l'extrémité de la portion finale 26 et 27 respective. Cette butée 30 empêche le curseur 29 de quitter les bandes 22 et 23 en fin de course de coulissement.

Sur chaque bande 22 et 23, la série de dents 28 s'étend entre le cran 41 et la butée 30.

La fermeture à curseur 19 est prévue pour assujettir l'une à l'autre les bandes 22 et 23 en déplaçant le curseur 29 entre les crans 41 et les butées 30.

En dehors des positions extrêmes illustrées sur les figures 5 et 8, c'est-à-dire lorsque le curseur 29 est dans une position intermédiaire entre les crans 41 et les butées 30, entre les crans 41 et le curseur 29, les dents 28 des bandes 22 et 23 sont interengagées les unes avec les autres tandis qu'entre le curseur 29 et les butées 30, les dents 28 de la bande 22 sont libres vis-à-vis des dents 28 de la bande 23.

Pour passer de la position ouverte de la chemise 11 illustrée sur les figures 5 et 7 à la position fermée illustrée sur la figure 8, la chemise 11 est courbée pour que le curseur 29 vienne en regard du cran 41 de la bande 22, le cran 41 est engagé dans le curseur 29 et le curseur 29 est coulissé le long des bandes 22 et 23 jusqu'à atteindre les butées 30.

La fermeture à curseur 19 offre à l'état fermé (figure 8) une étanchéité aux liquides.

Pour mettre en place la chemise 11 sur la zone de raccordement 1 équipée comme montré sur la figure 4, on place les bords 35 et 36 au niveau des faces externes respectivement du joint 12 et du joint 13 avec le bossage 34 ainsi que la canule 31 et les cheminées 32 au-dessus de la zone de raccordement 1 et des éléments dont elle est équipée, avec le bossage 34 centré sur le connecteur 8. On est alors dans la position illustrée sur la figure 7.

On entoure alors la zone de raccordement ainsi équipée avec la chemise 11 en faisant passer la bande 23 sous la zone de raccordement 1 pour qu'elle vienne se placer en regard de la bande 22 afin de permettre l'engagement du cran 41 de la bande 22 dans le curseur 29.

On fait alors coulisser le curseur 29 jusqu'à ce qu'il atteigne les butées 30.

La chemise 11 est alors à l'état fermé illustré sur la figure 8, où elle forme un manchon étanche aux liquides entourant latéralement la zone de raccordement 1.

Lorsqu'on fait coulisser le curseur 29 des crans 41 jusqu'aux butées 30, les portions initiales 24 et 25 se rapprochent l'une de l'autre alors que la peau 18 se tend et que le joint 12 se comprime, lorsque le curseur est au-delà des portions initiales 24, la peau 18 se tend autour de la zone de raccordement 1 équipée, le joint 13 se comprime et le curseur 29 dépasse la peau 18 et vient se placer au contact des butées 30 dans les portions finales 26 et 27.

La longueur relativement importante des portions initiales 24 et 25 permet au curseur 29 de prendre un peu de vitesse pour franchir le joint 12 et pour offrir une certaine progressivité dans la tension de la peau 18.

La longueur des portions finales 26 et 27 permet d'accueillir le curseur 29 au-delà de la peau 18.

On observera que les bossages 33 et 34 sont conformés pour que la chemise 11 s'ajuste étroitement autour du connecteur 8.

Du fait que la chemise 11 entoure étroitement les joints 12 et 13, en les comprimant, et du fait que la fermeture à curseur 19 est étanche aux liquides, la chemise 11 et les joints 12 et 13 forment une enceinte étanche aux liquides autour de la zone de raccordement 1.

Lorsque l'ensemble pour encapsuler est en place comme illustré sur la figure 8, il est alors possible d'injecter la pré-résine liquide par le conduit 37.

La pré-résine remplit alors l'espace délimité par la zone de raccordement 1, par les joints 12 et 13 et par la chemise 11.

L'air initialement contenu dans cet espace s'évacue par les orifices 38 des cheminées 32.

La pré-résine se polymérise (durcit) et donne une résine encapsulant la zone de raccordement de câbles 1.

La première nappe d'espacement 14 permet de garantir qu'il y a une épaisseur prédéterminée de résine entre le connecteur 8 et la nappe conductrice 15. De même, la deuxième nappe d'espacement 16 permet de garantir qu'il y a une épaisseur prédéterminée de résine autour de la nappe conductrice 15.

La zone de raccordement 1, l'ensemble 10 et la résine d'encapsulation forment alors un noeud de câbles pouvant être enterré de même que les câbles 2 et 3.

La figure 9 illustre une variante de la zone de raccordement de câbles 1 décrite ci-dessus. Dans cette variante, il n'y a qu'un seul câble de dérivation 3, qui s'étend du côté de la zone de raccordement de câbles 1 équipé du joint 13. Les conducteurs 47 et 48 sont ainsi engagés dans le connecteur 8 par une extrémité respective.

Dans cette variante, on a laissé en place dans la perforation 51 du joint 12 une prédécoupe 54 obtenue à la fabrication du joint 12 de façon à assurer l'étanchéité aux liquides.

Dans des variantes non illustrées, la zone de raccordement de câbles comporte un connecteur et des câbles disposés différemment, par exemple deux câbles principaux connectés bout à bout; et/ou les câbles font partie d'un réseau monophasé.

Dans d'autres variantes non illustrées, où les câbles n'ont pas d'écran de blindage, la nappe conductrice telle que 15 et la nappe d'espacement telle que 16 sont supprimées.

Dans des variantes non illustrées, la chemise d'enveloppement est utilisée différemment, par exemple sans les joints 12 et 13, avec l'étanchéité aux extrémités de la chemise qui se fait par du ruban adhésif.

Dans l'exemple illustré, la peau 18, la canule 31 et les cheminées 32 de la chemise d'enveloppement 11 sont moulées d'une seule pièce de façon classique et, c'est-à-dire entre deux moules rigides. En variante, la canule telle que 31 et les cheminées telles que 32 sont réalisées par des inserts surmoulés ; le moulage est réalisé par soufflage ; et/ou le nombre de cheminées tel que 32 est différent de trois, par exemple deux ou quatre.

Dans des variantes non illustrées, la fermeture à curseur telle que la fermeture 19 est différente, avec par exemple les portions finales telles que 26 et 27 qui sont supprimées ; et/ou les séries de dents 28 sont remplacées respectivement par une nervure longitudinale et par une rainure longitudinale avec le curseur tel que 29 qui est configuré pour faire s'engager la nervure dans la rainure.

De nombreuses autres variantes sont possibles en fonction des circonstances, et l'on rappelle à cet égard que l'invention ne se limite pas aux exemples décrits et représentés.

## Revendications

1. Enveloppement pour encapsuler une zone de raccordement de câbles (1), configuré pour permettre d'injecter entre la zone de raccordement de câbles (1) et l'enveloppement une pré-résine liquide polymérisable pour donner une résine encapsulant ladite zone de raccordement de câbles, **caractérisé en ce que** ledit enveloppement est formé par une chemise d'enveloppement (11) comportant une peau (18) en matière souple étanche aux liquides et une fermeture (19) à curseur (29) pour assujettir deux bords longitudinaux opposés (20, 21) de ladite peau (18), ladite chemise d'enveloppement (11) étant configurée pour former, dans un état fermé où lesdits deux bords longitudinaux (20, 21) sont assujettis l'un à l'autre par ladite fermeture (19), un manchon étanche aux liquides entourant latéralement ladite zone de raccordement de câbles.

2. Enveloppement selon la revendication 1, **caractérisé en ce que** ladite fermeture (19) à curseur (29) comporte deux bandes (22, 23) chacune fixée le long d'un respectif desdits bords longitudinaux opposés (20, 21) et comportant chacune au-delà d'un premier bord transversal (35) une portion initiale respective (24, 25).

3. Enveloppement selon la revendication 2, **caractérisé en ce que** lesdites bandes (22, 23) comportent chacune au-delà d'un deuxième bord transversal (36), une portion finale respective (26, 27).

4. Enveloppement selon l'une quelconque des revendications 1 à 3, **caractérisé en ce que** ladite peau (18) comporte deux bossages (33, 34).

5. Enveloppement selon l'une quelconque des revendications 1 à 4, **caractérisé en ce que** ladite chemise d'enveloppement comporte une canule (31) d'injection de ladite pré-résine et au moins une cheminée (32) d'évacuation d'air.

6. Ensemble pour encapsuler une zone de raccordement de câbles (1), comportant une chemise d'enveloppement (11) selon l'une quelconque des revendications 1 à 5 et deux joints (12, 13) configurés pour recevoir chacun au moins un câble (2, 3) et pour être entourés par ladite chemise le long d'un bord transversal respectif (35, 36).

7. Ensemble selon la revendication 6, **caractérisé en ce qu'il** comporte en outre au moins une nappe d'espacement (14, 16).

8. Noeud de câbles comportant :
- une zone de raccordement de câbles (1) comportant un connecteur (8), au moins un premier câble (2) s'étendant d'un premier côté du connecteur (8) et au moins un deuxième câble (3) s'étendant d'un deuxième côté du connecteur (8) opposé audit premier côté, avec chaque dit premier câble (2) et deuxième câble (3) qui comporte une gaine externe entourant au moins un conducteur (46-49) présentant une âme en matière conductrice et une gaine individuelle qui recouvre l'âme conductrice, ladite gaine externe du premier câble (2) étant enlevée entre le connecteur (8) et une zone où le premier câble (2) est entier, ladite gaine externe du deuxième câble (3) étant enlevée entre le connecteur (8) et une zone où le deuxième câble (3) est entier, le conducteur (46, 47) du premier câble (2) étant engagé dans ledit connecteur (8), le conducteur (48, 49) du deuxième câble (3) étant engagé dans ledit connecteur (8) ; et
- un ensemble selon l'une quelconque des revendications 6 ou 7, avec chaque dit joint (12, 13) qui est mis en place respectivement sur ladite zone où le premier câble (2) est entier et sur ladite zone où le deuxième câble (3) est entier.

9. Noeud selon la revendication 8, **caractérisé en ce que** ladite chemise d'enveloppement (11) est posée autour de ladite zone de raccordement de câbles (1) d'un desdits joints (12) à l'autre desdits joints (13).

10. Noeud selon la revendication 9, **caractérisé en ce que** ladite chemise d'enveloppement (11) est configurée pour enserrer ladite zone de raccordement de câbles (1) en comprimant chacun desdits joints (12, 13).
